# EUROPÄISCHE PATENTANMELDUNG

(11) **EP 0 744 236 A1**
(43) Veröffentlichungstag der Anmeldung: **27.11.1996**
(21) Anmeldenummer: 96108217.9
(22) Anmeldetag: 23.05.1996
(51) Int. Cl.: B23D 57/00, B28D 5/04

(54) **Drahtsäge und Verfahren zum Abtrennen von Scheiben von einem Werkstück**

(30) Priorität: 26.05.1995 DE 19519460
(71) Anmelder: Wacker Siltronic Gesellschaft für Halbleitermaterialien Aktiengesellschaft, 84489 Burghausen (DE)
(72) Erfinder: Egglhuber, Karl, 84332 Hebertsfelden (DE)
(74) Vertreter: Schuderer, Michael

(57) **Zusammenfassung**

Die Drahtsäge besitzt einen, mehrere Drahtführungsrollen (9) umfassenden Sägekopf (5), um den eine Vielzahl parallel zueinander liegender Drahtabschnitte bewegt werden, die ebene Drahtgatter (11) bilden, einen Haltearm, der das Werkstück (10) trägt und einen Vorschub (1), mit dessen Hilfe sich die Drahtabschnitte eines der Drahtgatter unter Zuführung eines Sägehilfsmittels durch das Werkstück arbeiten. Eine Ausführungsform der Drahtsäge ist dadurch gekennzeichnet, daß die Vorschubführung (3) seitlich des Sägekopfes (5) angeordnet ist und der Haltearm (2) parallel zum Drahtgatter schwenkbar ist. Kennzeichen einer anderen Ausführungsform ist, daß der Haltearm parallel zu dem Drahtgatter schwenkbar ist und der Vorschub über eine Vorschubführung verfügt, die den Sägekopf mit dem Drahtgatter gegen das Werkstück führt. Zum Zweck eines Werkstückwechsels wird das Werkstück von einem es tragenden Haltearm aus einer Sägeposition über einem Drahtgatter in eine Ablageposition transportiert in der Ablageposition vom Haltearm gelöst, ein neues Werkstück vom Haltearm aus einer Aufnahmeposition aufgenommen und das neue Werkstück vom Haltearm in eine Sägeposition über einem Drahtgatter transportiert. Der Sägekopf und ein zweiter Sägekopf können abwechselnd zum Abtrennen von Scheiben eingesetzt werden, wobei der nicht eingesetzte Sägekopf auf seinen Einsatz vorbereitet wird, während der andere Sägekopf im Einsatz ist.

## Beschreibung

Gegenstand der Erfindung ist eine Drahtsäge zum Abtrennen von Scheiben von einem Werkstück, insbesondere zum Abtrennen von Halbleiterscheiben von stab- oder blockförmigem Halbleitermaterial. Gegenstand der Erfindung sind auch Sägeverfahren, zu deren Durchführung die Drahtsäge besonders geeignet ist.

Drahtsägen der genannten Art umfassen im wesentlichen einen Sägekopf mit mehreren Drahtführungsrollen, von denen mindestens eine angetrieben ist, und um den eine Vielzahl parallel zueinander liegender Drahtabschnitte bewegt werden, die ebene Drahtgatter bilden, wobei das Werkstück mit Hilfe eines Vorschubs und unter Zuführung eines Sägehilfsmittels von oben gegen eines der Drahtgatter geführt wird. Die Drahtabschnitte können zu einem einzigen, endlichen Draht gehören, der um den Sägekopf gewendelt ist und von einer Vorratsspule auf eine Aufnahmespule gewickelt wird. In der Patentschrift US 4,655,191 ist eine sich davon nur wenig unterscheidende Drahtsäge offenbart, bei der eine Vielzahl endlicher Drähte vorgesehen ist und jeder Drahtabschnitt eines Drahtgatters einem dieser Drähte zugeordnet ist. Aus der EP-522 542 A1 ist auch eine Drahtsäge bekannt, bei der eine Vielzahl von endlosen Drahtschlaufen um den Sägekopf laufen.

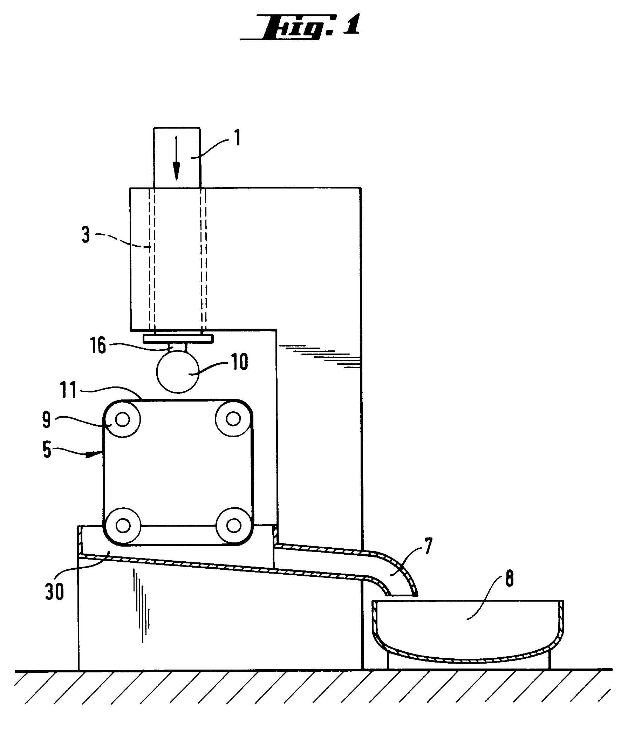

Eine Drahtsäge des Stands der Technik ist in Figur 1 schematisch dargestellt. Die Figur zeigt die Drahtsäge in Seitenansicht. Der Vorschub 1 umfaßt eine Werkstückhalterung 16, die das Werkstück 10 fixiert und eine Vorschubführung 3, mit der das Werkstück beim Sägen unter Zuführung eines Sägehilfsmittels in einer linearen Bewegung von oben gegen das Drahtgatter 11 des Sägekopfes 5 geführt wird. Das Sägehilfsmittel besteht in der Regel aus abrasiven Hartstoffsteilchen, die in einer Flüssigkeit dispergiert sind. Es wird unterhalb des Sägekopfes in einer Wanne 30 aufgefangen und in einer Rinne 7 zu einem Sammelbehälter 8 geleitet. Die gezeigte Anordnung der Maschinenteile ist in verschiedener Hinsicht ungünstig. So wirkt sich die Anordnung der Vorschubführung über dem Drahtgatter ungünstig auf die Bauhöhe der Drahtsäge aus. Die Drahtsäge wird so groß, daß wegen ihrer Größe sowohl beim Transport als auch bei der Unterbringung Probleme auftreten. Um die Drahtsäge nicht noch größer werden zu lassen, muß daher unterhalb des Sägekopfs Platz gespart werden. Dadurch bleibt kaum noch ausreichend Niveauunterschied zwischen der Wanne, der Rinne und dem Sammelbehälter, so daß sich die Hartstoffteilchen in der Wanne und der Rinne absetzen und den Abfluß von weiterem Sägehilfsmittel blockieren. Die Anordnung der Vorschubführung über dem Drahtgatter erschwert auch den Zugang zum Drahtgatter und zum Werkstück. Sie ist mitverantwortlich, daß ein gegebenenfalls notwendiger Wechsel der Drahtabschnitte oder der Drahtführungsrollen oder der Ein- und Ausbau des Werkstücks lange Stillstandszeiten beanspruchen, während der die Drahtsäge nicht in Betrieb genommen werden kann.

Die Aufgabe der vorliegenden Erfindung ist die Bereitstellung einer Drahtsäge, die die genannten Nachteile nicht aufweist und die Bereitstellung eines Sägeverfahrens, durch das die Bearbeitung von Werkstücken effektiver gestaltet werden kann.

Gegenstand der Erfindung ist eine Drahtsäge zum Abtrennen von Scheiben von einem Werkstück mit einem, mehrere Drahtführungsrollen umfassenden Sägekopf, um den eine Vielzahl parallel zueinander liegender Drahtabschnitte bewegt werden, die ebene Drahtgatter bilden, wobei das Werkstück mit Hilfe eines Vorschubs und unter Zuführung eines Sägehilfsmittels von oben gegen eines der Drahtgatter geführt wird, und der Vorschub einen das Werkstück tragenden Haltearm umfaßt, dadurch gekennzeichnet, daß der Vorschub seitlich des Sägekopfes angeordnet ist und der Haltearm parallel zu diesem Drahtgatter schwenkbar ist.

Dadurch, daß die Vorschubführung seitlich neben dem Sägekopf angeordnet ist, besteht oberhalb des Drahtgatters im wesentlichen nur noch ein Platzbedarf für den Haltearm und das Werkstück. Die Drahtsäge kann dadurch in bezug auf die Bauhöhe gedrungener ausgebildet und der Sägekopf höher angeordnet werden. Unterhalb des Sägekopfes bleibt mehr Raum für eine stärkere Neigung der Rinne, damit das gebrauchte Sägehilfsmittel sicher in den vorgesehenen Sammelbehälter abfließen kann. Durch den schwenkbaren Haltearm wird der Werkstückwechsel vereinfacht und das Drahtgatter des Sägekopfes für Wartungsmaßnahmen, wie beispielsweise einen Drahtwechsel, frei zugänglich.

Der Maschinenrahmen der Drahtsäge, die tragenden Teile des Vorschubs und der Drahtführungsrollen sind als schwere und mechanisch stabile Teile ausgebildet, die vorzugsweise durch ein Kühlmittel temperiert werden. Die beim Sägevorgang entstehende Wärme ist insbesondere bei der Herstellung von Halbleiterscheiben rasch abzuführen, um zu verhindern, daß sich Temperaturschwankungen nachteilig auf die Geometrie der vom Werkstück abgetrennten Scheiben auswirkt. In diesem Zusammenhang sei auf die am 23.3.95 beim Deutschen Patentamt eingereichte Patentanmeldung mit der Anmeldenummer 19510625.3 hingewiesen, in der dieses Problem näher beschrieben ist und in der ein System zum Nachführen der Drahtabschnitte vorgeschlagen wird. In einer Weiterbildung der vorliegenden Erfindung ist vorgesehen, die Drahtsäge mit diesem Nachführungssystem auszurüsten.

In einer Weiterbildung der Erfindung ist der Vorschub seitlich und versetzt vom Sägekopf angeordnet. Dies hat den zusätzlichen Vorteil, daß der Sägekopf von allen Seiten zugänglich ist und beispielsweise die Inspektion oder der Wechsel der Drahtführungsrollen durch die Gegenwart des Vorschubs nicht behindert wird.

Gemäß einer anderen Weiterbildung der Erfindung ist die Drahtsäge mit mindestens einem weiteren Sägekopf ausgestattet, der bereits für den Sägeeinsatz vorbereitet wird, während der erste Sägekopf noch zum Abtrennen von Scheiben eingesetzt wird. Bei einem aus technischen Gründen angezeigten Sägekopfwechsel kann der vorbereitete Sägekopf zur Bearbeitung weiterer Werkstücke sofort eingesetzt und der erste Sägekopf für weitere Einsätze wieder in Stand gesetzt werden. Stillstandszeiten der Drahtsäge, die durch die Wartung des Sägekopfes hervorgerufen werden, werden damit drastisch verkürzt.

Eine andere Weiterbildung der Erfindung sieht schließlich eine Steuerungseinheit vor, die sämtliche Maschinen-Bewegungen, insbesondere Bewegungen des Vorschubs und des Sägekopfes veranlaßt und koordiniert, so daß ein hoher Automatisierungsgrad erreicht wird.

Gegenstand der Erfindung ist auch ein Verfahren zum Abtrennen von Scheiben von einem Werkstück mit Hilfe einer Drahtsäge mit einem, mehrere Drahtführungsrollen umfassenden Sägekopf, um den eine Vielzahl parallel zueinander liegender Drahtabschnitte bewegt werden, die ebene Drahtgatter bilden, und mit einem Vorschub, mit dessen Hilfe sich die Drahtabschnitte eines der Drahtgatter unter Zuführung eines Sägehilfsmittels durch das Werkstück arbeiten, dadurch gekennzeichnet, daß zum Zweck eines Werkstückwechsels das Werkstück von einem es tragenden Haltearm aus einer Sägeposition über einem Drahtgatter in eine Ablageposition transportiert wird, das Werkstück in der Ablageposition vom Haltearm gelöst wird, ein neues Werkstück vom Haltearm aus einer Aufnahmeposition aufgenommen wird, und das neue Werkstück vom Haltearm in eine Sägeposition über einem Drahtgatter transportiert wird.
Das Sägeverfahren vereinfacht den Werkstückwechsel und kann sowohl mit bekannten Drahtsägen als auch insbesondere mit einer Drahtsäge gemäß der Erfindung durchgeführt werden. Dies gilt auch für ein weiteres Verfahren, das Gegenstand der Erfindung ist und dadurch gekennzeichnet ist, daß der Sägekopf und ein zweiter Sägekopf abwechselnd zum Abtrennen von Scheiben eingesetzt werden, wobei der nicht eingesetzte Sägekopf auf seinen Einsatz vorbereitet wird, während der andere Sägekopf im Einsatz ist.

Die Erfindung wird nachfolgend an Hand von Figuren näher beschrieben. Gleiche Bezugsziffern bezeichnen gleichartige Vorrichtungsmerkmale. Es sind nur die zum Verständnis der Erfindung notwendigen Merkmale dargestellt. Bei den in den Figuren schematisch dargestellten Drahtsägen handelt es sich lediglich um bevorzugte Ausführungsformen der Erfindung.
Figur 2a zeigt eine Drahtsäge in Seitenansicht.
Die Figuren 2b und 2c sind Aufsicht-Darstellungen der Drahtsäge gemäß Figur 2a mit zwei verschiedenen Anordnungen des Vorschubs seitlich des Sägekopfes.
In Figur 2d ist eine Drahtsäge gemäß Figur 2a mit verfahrbarem Vorschub dargestellt.
Figur 3 zeigt eine Drahtsäge in Seitenansicht mit einem als Wippe ausgebildeten Haltearm.
Figur 4 ist eine Aufsicht-Darstellung einer Drahtsäge mit zwei Sägeköpfen.
Figur 5 zeigt in Aufsicht-Darstellung eine Drahtsäge und einen Manipulator zur Vereinfachung des Werkstückwechsels.
Figur 6 zeigt die Seitenansicht einer Drahtsäge, die ebenfalls mit einem zweiten Sägekopf ausgestattet ist.
Figur 7 zeigt eine Drahtsäge in Seitenansicht mit einem, den Sägekopf bewegenden Vorschub.

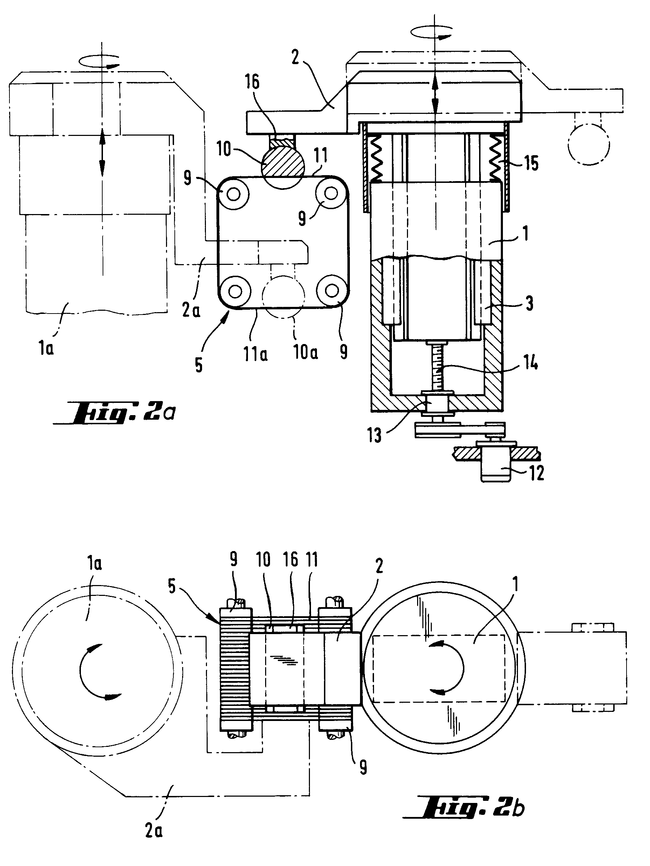

Die Drahtsäge gemäß Figur 2a umfaßt einen Sägekopf 5 mit vier Drahtführungsrollen 9 und einen Vorschub 1 mit einer Vorschubführung 3 und einem Haltearm 2. Der Sägekopf kann auch beispielsweise nur drei Drahtführungsrollen umfassen, die so angeordnet sind, daß sie bei einer Betrachtung im Querschnitt an den Ecken eines Dreiecks liegen, das auf einer der Dreiecksspitzen steht. Der Sägekopf kann aber auch nur zwei oder mehr als vier Drahtführungsrollen umfassen. Der Vorschub 1 steht seitlich vom Sägekopf 5 gegenüber einer der vier Seiten des Sägekopfes, entweder wie in Figur 2a dargestellt oder um 90° gedreht an den Stirnseiten der Drahtführungsrollen. Die Längsachsen der Drahtführungsrollen und des Werkstücks liegen in beiden Fällen parallel zueinander, so daß beim Durchgang des Werkstücks durch das Drahtgatter Scheiben abgetrennt werden.

Der endständige Teil des Haltearms 2, an dem das Werkstück 10 befestigt ist, ragt bis in den Bereich, der sich über dem als Sägewerkzeug dienenden Drahtgatter 11 des Sägekopfes befindet. Die Vorschubführung 3 ist als Linearführung ausgebildet und kann mit Hilfe des Antriebs 12 und der im Lager 13 gelagerten Spindel 14 axial angehoben und abgesenkt werden. Bei dieser Bewegung wird gleichzeitig der auf der Vorschubführung 3 gelagerte Haltearm 2 angehoben oder abgesenkt. Die Vorschubführung ist durch einen Faltenbalg 15 vor Verschmutzung durch das Sägehilfsmittel geschützt. Das Werkstück 10 ist mit einer Werkstückhalterung 16 verbunden, beispielsweise verklebt, die am Haltearm 2 lösbar befestigt ist. Die Befestigung erfolgt vorzugsweise durch eine nicht dargestellte Klemmvorrichtung. Der Haltearm 2 der Drahtsäge kann parallel zum Drahtgatter 11 geschwenkt werden. Die Drehachse dieser Drehbewegung verläuft senkrecht zur Ebene des Drahtgatters. Die Figur 2a zeigt auch andeutungsweise die Position des Haltearms 2 nach einer Drehung um 180°. Der Haltearm kann auf der Vorschubführung drehbar gelagert sein. Eine andere Lösung sieht vor, daß der gesamte Vorschub gedreht werden kann, beispielsweise dadurch, daß er auf einem Drehteller montiert ist. Die Drehbewegung des Haltearms übernimmt ein in den Figuren nicht dargestellter Antrieb. Weiterhin ist eine Klemmvorrichtung vorgesehen, die eine Arretierung des Haltearms in bestimmten Positionen, beispielsweise in der Sägeposition, bei der sich das Werkstück über dem Drahtgatter befindet, ermöglicht. Die Klemmvorrichtung ist in der Figur ebenfalls weggelassen.

Beim Absenken der Vorschubführung 3 wird das Werkstück 10 gegen das Drahtgatter 11 gedrückt. Unter gleichzeitiger Zuführung von Sägehilfsmittel dringen die Drahtabschnitte in das Werkstück ein und teilen es in eine Vielzahl von nebeneinander liegenden Scheiben. Die Scheiben sind vollständig vom Werkstück abgetrennt, wenn die Drahtabschnitte das Werkstück verlassen haben und in den angrenzenden Teil der Werkstückhalterung 16 eingedrungen sind.

Eine Weiterbildung der Drahtsäge ist mit einem zweiten Vorschub 1a und einem Haltearm 2a ausgestattet, so daß gleichzeitig mit dem Werkstück 10 ein zweites Werkstück 10a auf dem Drahtgatter 11a gesägt werden kann. Dies läßt sich alternativ auch ohne zweiten Vorschub erreichen, indem der Haltearm 2 so ausgebildet ist, daß er ein zweites Werkstück tragen und es beim Absenken gegen das Drahtgatter 11a führen kann.

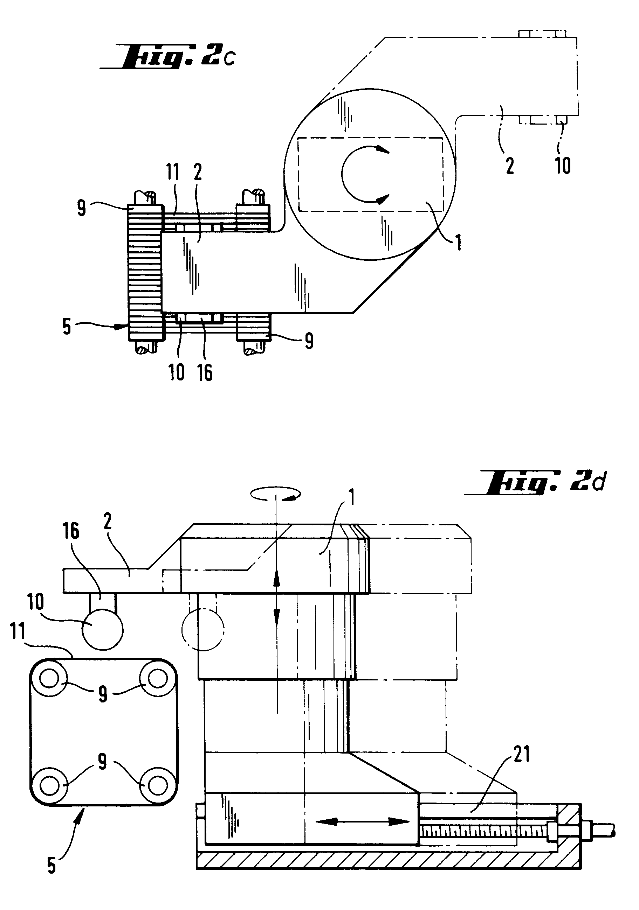

In der Ausführungsform gemäß Figur 2b ist der Vorschub 1 seitlich des Sägekopfes 5 angeordnet und befindet sich mit diesem auf einer Linie. Figur 2c zeigt einen abgewinkelt ausgebildeten Haltearm 2, wobei der Vorschub 1 seitlich und versetzt vom Sägekopf 5 angeordnet ist. Diese Anordnung besitzt den bereits genannten Vorteil, daß der Sägekopf von allen Seiten leicht zugänglich ist, was beispielsweise einen Wechsel der Drahtführungsrollen erleichtert. Bei der Ausführungsform gemäß Figur 2d wird zusätzlich Platz neben dem Sägekopf geschaffen, weil der Vorschub 1 entlang einer Linearführung 21, beispielsweise auf einer Schiene, und vorzugsweise parallel oder im rechten Winkel zu den Achsen der Drahtführungsrollen vom Sägekopf verfahrbar ist. Zweckmäßigerweise wird der Vorschub mit Hilfe einer nicht dargestellten Klemmvorrichtung auch am neuen Standort fixiert.

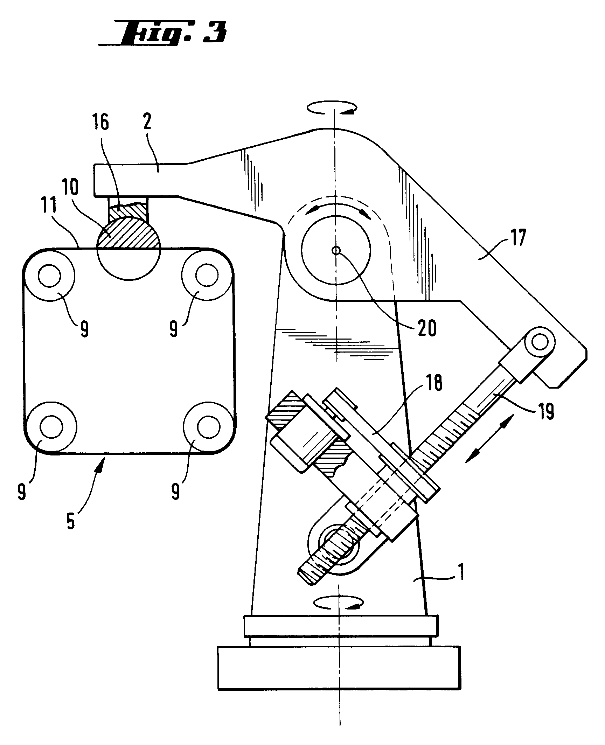

Eine weitere Ausführungsform der Drahtsäge ist in Figur 3 dargestellt. Im Unterschied zu den bisher beschriebenen Ausführungsformen wird bei dieser Ausführungsform das Werkstück 10 auf einer Kreisbahn gegen das Drahtgatter 11 des Sägekopfes 5 geführt. Der Haltearm 2 des Vorschubs 1 ist zur gegenüberliegenden Seite hin verlängert und bildet zusammen mit dieser Verlängerung eine Wippe 17, die mit Hilfe des Antriebs 18 und über die Antriebsspindel 19 um den Drehpunkt 20 bewegt werden kann. Durch diese Bewegung wird das an der Werkstückhalterung 16 befestigte Werkstück 10 entweder angehoben oder gegen das Drahtgatter 11 gedrückt. Das Werkstück kann auch bei dieser Ausführungsform aus der Position über dem Drahtgatter parallel zur Ebene des Drahtgatters geschwenkt werden. Dies kann, wie es in der Figur 3 angedeutet ist, dadurch geschehen, daß der Vorschub auf einer drehbaren Unterlage steht. Es ist jedoch ebenso möglich, den Haltearm auf einem Drehlager abzustützen, so daß er unabhängig vom Rest des Vorschubs geschwenkt werden kann. Außerdem kann der Vorschub, wie bei der Ausführungsform gemäß Figur 2d gezeigt, relativ zum Sägekopf verfahrbar ausgebildet sein.

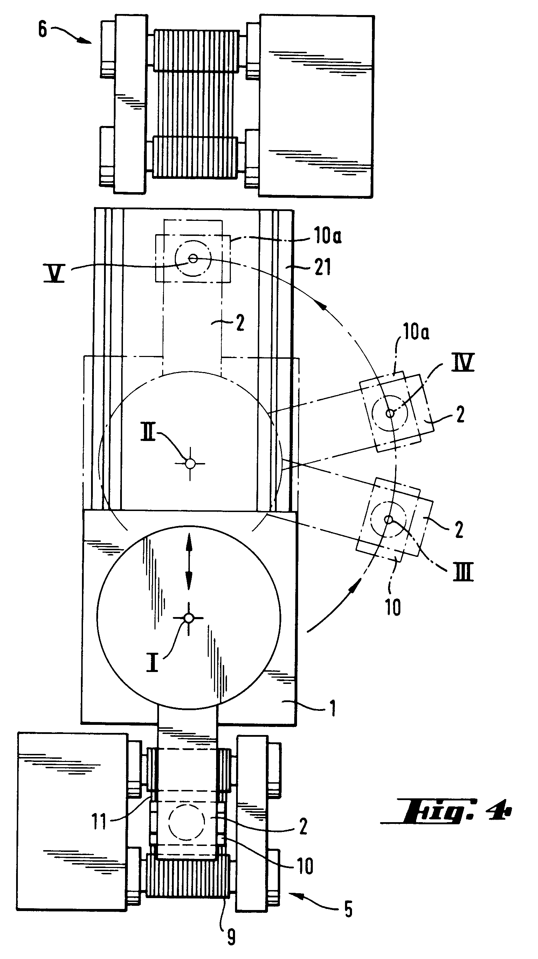

In Figur 4 ist als Weiterbildung der Erfindung eine Drahtsäge dargestellt, die mit zwei Sägeköpfen ausgestattet ist. Bei der Figur handelt es sich um eine Prinzipskizze, in der nur die zum Verständnis des Funktionsprinzips der Drahtsäge benötigten Merkmale dargestellt sind. Sie dient auch dazu, die erfindungsgemäßen Sägeverfahren zu erklären.

Jeder Sägekopf 5,6 befindet sich in einem Raum, der abwechselnd als Sägestation und als Rüststation benützt wird. Zwischen den Sägeköpfen ist ein Vorschub 1 angeordnet, der über eine Linearführung 21 von einem Sägekopf zum gegenüberliegenden Sägekopf verfahrbar ist. Während der eine Sägekopf 5 in Betrieb ist, wird der andere Sägekopf 6 auf seinen nächsten Einsatz vorbereitet.

Ein Werkstückwechsel erfolgt erfindungsgemäß dadurch, daß der Haltearm 2 aus einer Sägeposition über dem Drahtgatter in eine Ablageposition und von der Ablageposition in eine Aufnahmeposition und zurück in eine Sägeposition geschwenkt wird, wobei in der Ablageposition ein bereits gesägtes Werkstück abgelegt und in der Aufnahmeposition ein zu sägendes Werkstück aufgenommen wird. Die Sägeposition, in die der Haltearm nach der Aufnahme eines neuen Werkstücks schwenkt, ist bei einer Drahtsäge mit einem Sägekopf natürlich die Position über dem als Sägewerkzeug genutzten Drahtgatter dieses Sägekopfes. Bei einer Drahtsäge mit zwei Sägeköpfen ist dies die Position über einem Drahtgatter eines der Sägeköpfe, je nachdem ob nach dem Werkstückwechsel auch ein Sägekopfwechsel beabsichtigt ist. Bei einem kombinierten Werkstück- und Sägekopfwechsel wird der Vorschub 1 mit dem Haltearm 2 aus der Sägeposition I in eine Position II in der Mitte zwischen den beiden Sägeköpfen verschoben. Danach schwenkt der Haltearm 2 in die Ablageposition III, wobei die Klemmung der Werkstückhalterung gelöst und das Werkstück in einen Behälter abgelegt wird, der beispielsweise mit einer Reinigungsflüssigkeit gefüllt ist. Aus der Ablageposition schwenkt der Haltearm weiter in die Aufnahmeposition IV und übernimmt das zu sägende Werkstück 10a, das vorzugsweise von einer automatisch arbeitenden Zustellvorrichtung bereitgestellt wird. Anschließend schwenkt der Haltearm weiter zur Position V, von der er durch Verschieben des Vorschubs die Sägeposition über dem Drahtgatter des anderen Sägekopfes erreicht. Nötigenfalls kann der Schwenkbewegung des Haltearms auch eine Bewegung in vertikaler Richtung überlagert sein. Es ist bevorzugt, daß jeder Sägekopf 5,6 über eine eigene Versorgung mit Sägehilfsmittel und einen eigenen Sammelbehälter für gebrauchtes Sägehilfsmittel verfügt.

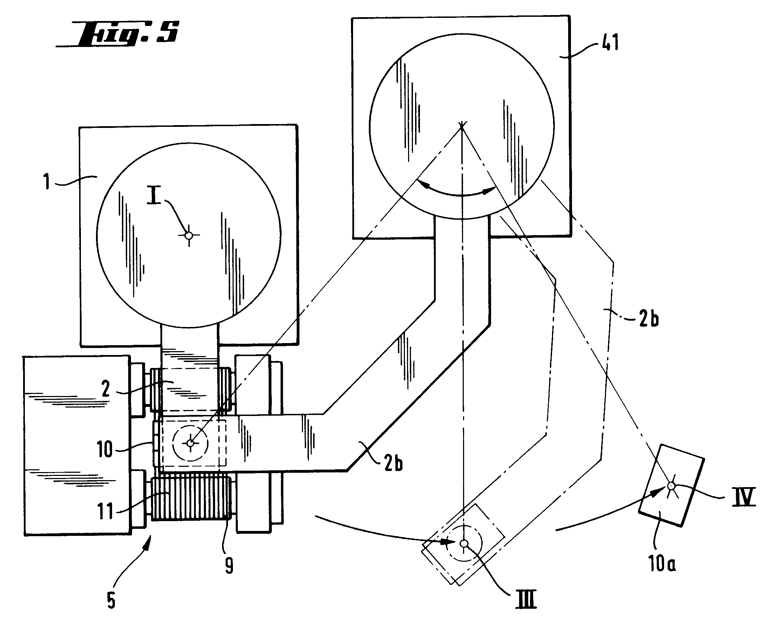

Ein Werkstückwechsel kann aber auch auf eine Weise ablaufen, wie es in Figur 5 dargestellt ist. Das Verfahren ist sowohl auf Drahtsägen gemäß der Erfindung als auch auf Drahtsägen bekannter Bauart anwendbar. Zur Durchführung des Verfahrens wird ein Manipulator 41 bereitgestellt, der seitlich neben dem Vorschub 1 angeordnet ist und über einen schwenkbaren Haltearm 2b verfügt, der vorzugsweise auch angehoben und abgesenkt werden kann. Für den Werkstückwechsel übernimmt der Haltearm 2b das Werkstück 10 vom Haltearm 2 und transportiert es aus der Sägeposition über dem Drahtgatter in die Ablageposition III, in der das Werkstück vom Haltearm gelöst und abgelegt wird. Das neue Werkstück 10a wird vom Haltearm 2b in der Aufnahmeposition IV aufgenommen und von dort in die Sägeposition gebracht und dem Haltearm 2 der Drahtsäge übergeben.

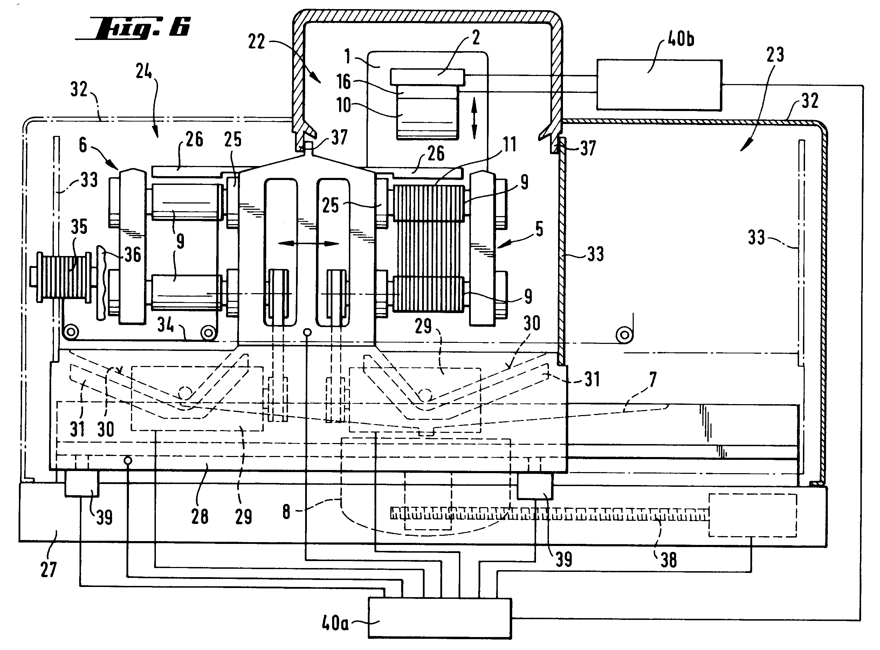

In Figur 6 ist eine andere Ausführungsform einer Drahtsäge gezeigt, die mit zwei Sägeköpfen 5 und 6 ausgestattet ist. Während der eine Sägekopf 5 zusammen mit dem Vorschub 1 in der Sägestation 22 zur Bearbeitung eines Werkstückes 10 eingesetzt wird, wird der andere Sägekopf 6 in einer Rüststation 24 auf seinen Einsatz vorbereitet. Um den in Betrieb befindlichen Sägekopf läuft ein endlicher Draht, der von einer Vorratsspule ab- und auf eine Aufnahmespule aufgewickelt wird. Die Vorbereitung eines Sägekopfes umfaßt beispielsweise das Auflegen eines neuen Sägedrahtes 34 oder Wartungsarbeiten, wie den Wechsel von Drahtführungsrollen 9 oder deren Lager 25 oder die Reinigung und Justierung der Austrittsdüsen 26 des Sägehilfsmittels. Die beiden Sägeköpfe 5 und 6 sind auf einem, relativ zu einem feststehenden Grundgestell 27 verschiebbaren Grundrahmen 28 montiert. Für jeden Sägekopf steht ein eigener Motor 29 zur Verfügung, der die entsprechenden Drahtführungsrollen zum Bearbeiten eines Werkstückes oder zum Auflegen eines neuen Sägedrahtes antreiben kann. Jeder Sägekopf hat auch vorzugsweise eine eigene Wanne 30, in der das Sägehilfsmittel aufgefangen wird. Über Rinnen 7 wird das Sägehilfsmittel, das von einem Sägekopf abfließt, dem Sammelbehälter 8 zugeführt. Unter den Wannen 30 sind Hohlräume 31 vorgesehen, in denen eine Kühlflüssigkeit zirkuliert. Die Temperierung des Grundrahmens soll Wärmeausdehnungen entgegenwirken, die durch das Sägehilfsmittel verursacht werden, das beim Sägevorgang erwärmt wird. Die Seitenabdeckungen 32 und 33 der Rüststationen 23 und 24 sind abnehmbar ausgeführt, damit die Sägeköpfe gut zugänglich sind.

Auf der Drahtspule 35 ist der zum Auflegen eines neuen Sägedrahtes notwendige Drahtvorrat aufgewickelt. Die Drahtspule ist an ein Antriebssystem 36 gekoppelt, das in Abhängigkeit von der Drehzahl der Drahtführungsrollen rotiert und den Draht zum Auflegen auf die Drahtführungsrollen unter Vorspannung kontrolliert zuführt.

Zum Sägekopfwechsel wird der Sägevorgang kurzzeitig unterbrochen. Gegebenenfalls wird der Vorschub ein Stück vom Sägekopf weggefahren. Dann wird der Sägedraht des auszutauschenden Sägekopfes auf eine Vorratsspule aufgewickelt oder gekappt und vollständig vom Sägekopf entfernt, und der Grundrahmen 28 mit den beiden Sägeköpfen verschoben und zwar so, daß der eine Sägekopf 5 aus der Sägestation 22 in die freie Rüststation 23 und der andere, vorbereitete Sägekopf 6 gleichzeitig in die Sägestation 22 gelangt. Dabei verschließen die sich überlappenden Kanten 37, die vorzugsweise mit Dichtlippen belegt sind, die Sägestation und die angrenzende Rüststation. Die Verschiebung des Grundrahmens 28 erfolgt vorzugsweise entlang einer Linearführung mit Hilfe eines motorgetriebenen Spindelsystems 38. Grundsätzlich kann aber auch ein Drehteller als Grundrahmen vorgesehen sein und der Wechsel der Sägeköpfe durch eine Drehung des Drehtellers erfolgen. Mit lösbaren Klemmvorrichtungen 39 wird sichergestellt, daß Verschiebungen der Sägeköpfe während des Sägevorgangs ausgeschlossen sind. Sobald sich der vorbereitete Sägekopf in der Sägestation befindet, kann die Drahtspule 35 an die vorgesehene Abwickelspindel, die während des Sägevorgangs aktiv ist, montiert und das vom Drahtauflegen stammende, freie Drahtende auf der vorgesehenen Aufwickelspule befestigt werden.

In einer bevorzugten Weiterbildung der Erfindung ist die Drahtsäge, wie beispielhaft in Figur 6 gezeigt, an eine Steuerungseinheit 40a,b gekoppelt, die alle Bewegungsabläufe koordiniert und dadurch einen hohen Automatisierungsgrad des Sägeverfahrens ermöglicht. So ist es insbesondere von Vorteil, wenn die Bewegungen des Vorschubs, der Vorschubführung, des Haltearms, des Sägekopfes (der Sägeköpfe), des Antriebs der Drahtführungsrollen und gegebenenfalls des Manipulators automatisch veranlaßt werden. Ebenso ist bevorzugt, daß auch die vorzugsweise mechanisch, hydraulisch oder pneumatisch arbeitenden Klemmvorrichtungen für den Vorschub, den Haltearm, die Werkstückhalterung und den Grundrahmen durch die Steuerungseinheit automatisch aktiviert und gelöst werden.

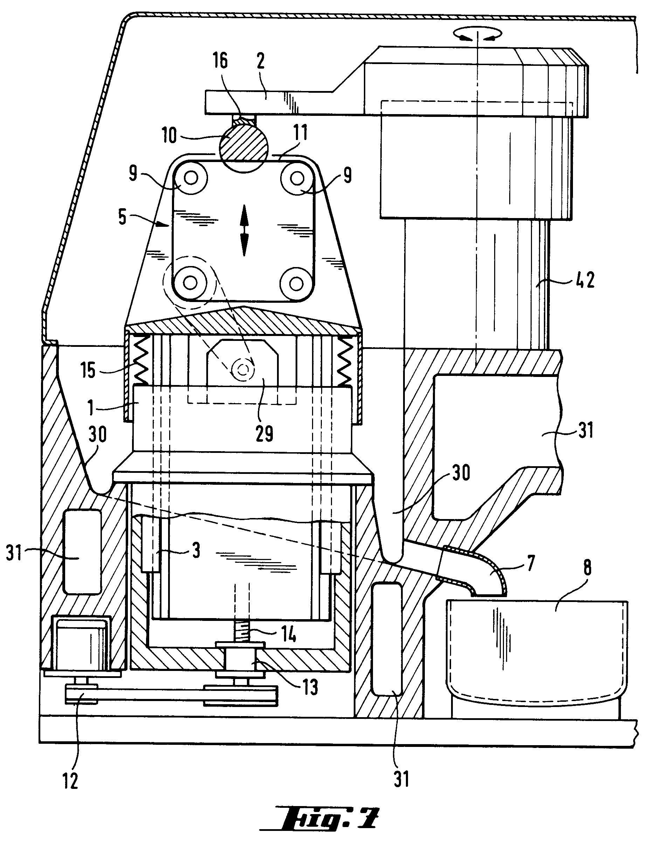

Zur vorliegenden Erfindung gehört auch eine Drahtsäge gemäß Figur 7 mit einem Vorschub 1, der den Sägekopf 5 mit dem Drahtgatter 11 gegen das Werkstück 10 führt. Der Raum unter dem Sägekopf wird bei dieser Ausführungsform nicht nur für die Wanne 30 und die Rinne 7 zur Entsorgung von Sägehilfsmittel in den Sammelbehälter 8 genutzt, sondern auch zur Unterbringung des Vorschubs 1. Die Vorschubführung 3 ist als Linearführung ausgebildet und kann mit Hilfe des Antriebs 12 und der im Lager 13 gelagerten Spindel 14 axial angehoben und abgesenkt werden. Dabei werden der Sägekopf 5 und der Antriebsmotor 29 für die Drahtführungsrollen 9 in Pfeilrichtung mitbewegt. Die Vorschubführung 3 ist durch den Faltenbalg 15 vor Verschmutzung durch Sägehilfsmittel geschützt. Die Drahtsäge weist vorzugsweise mehrere Kühlkanäle 31 auf, in denen während des Sägevorganges eine Kühlflüssigkeit zirkuliert, um ungünstige Wärmedehnungen der Drahtsägenteile zu vermeiden. Der das Werkstück 10 tragende Haltearm 2 ist drehbar und vorzugsweise heb- und senkbar auf einer Konsole 42 gelagert und parallel zum Drahtgatter 11 schwenkbar. Die Konsole ist seitlich neben dem Sägekopf, gegebenenfalls auch gegenüber den Stirnseiten der Drahtführungsrollen angeordnet und gegebenenfalls verfahrbar, beispielsweise so, wie der Vorschub 1 in Figur 2d. In einer besonderen Ausführungsform ist die Konsole 42 als Vorschub ausgebildet, beispielsweise als Vorschub 1 mit Linearführung gemäß Figur 2a oder als Vorschub 1 mit Wippe gemäß Figur 3.

## Patentansprüche

1. Drahtsäge zum Abtrennen von Scheiben von einem Werkstück mit einem, mehrere Drahtführungsrollen umfassenden Sägekopf, um den eine Vielzahl parallel zueinander liegender Drahtabschnitte bewegt werden, die ebene Drahtgatter bilden, wobei das Werkstück mit Hilfe eines Vorschubs und unter Zuführung eines Sägehilfsmittels von oben gegen eines der Drahtgatter geführt wird, und der Vorschub einen das Werkstück tragenden Haltearm umfaßt, dadurch gekennzeichnet, daß der Vorschub seitlich des Sägekopfes angeordnet ist und der Haltearm parallel zu diesem Drahtgatter schwenkbar ist.

2. Drahtsäge nach Anspruch 1, dadurch gekennzeichnet, daß der Haltearm ein zweites Werkstück trägt, das gegen ein zweites Drahtgatter geführt wird.

3. Drahtsäge nach Anspruch 1, dadurch gekennzeichnet, daß seitlich des Sägekopfes ein zweiter Vorschub vorgesehen ist, dessen Haltearm ein zweites Werkstück trägt und parallel zu einem zweiten Drahtgatter schwenkbar ist.

4. Drahtsäge nach Anspruch 1, dadurch gekennzeichnet, daß der Vorschub eine Vorschubführung umfaßt, die als Linearführung ausgebildet ist.

5. Drahtsäge nach Anspruch 1, dadurch gekennzeichnet, daß der Haltearm als Wippe ausgebildet ist, die das Werkstück auf einer Kreisbahn gegen das Drahtgatter führt.

6. Drahtsäge nach einem der Ansprüche 1 bis 5, dadurch gekennzeichnet, daß der Vorschub seitlich und versetzt vom Sägekopf angeordnet ist.

7. Drahtsäge nach einem der Ansprüche 1 bis 6, dadurch gekennzeichnet, daß der Vorschub relativ zum Sägekopf verfahrbar ist.

8. Drahtsäge nach einem der Ansprüche 1 bis 7, dadurch gekennzeichnet, daß der Sägekopf relativ zum Vorschub verfahrbar ist.

9. Drahtsäge nach Anspruch 8, gekennzeichnet durch einen zweiten Sägekopf, der abwechselnd mit dem anderen Sägekopf zum Abtrennen von Scheiben eingesetzt wird.

10. Drahtsäge nach einem der Ansprüche 1 bis 9, dadurch gekennzeichnet, daß eine Steuerungseinheit vorgesehen ist, die alle Bewegungsabläufe automatisch steuert.

11. Drahtsäge zum Abtrennen von Scheiben von einem Werkstück mit einem, mehrere Drahtführungsrollen umfassenden Sägekopf, um den eine Vielzahl parallel zueinander liegender Drahtabschnitte bewegt werden, die ebene Drahtgatter bilden, mit einem das Werkstück tragenden Haltearm und mit einem Vorschub, mit dessen Hilfe sich die Drahtabschnitte eines der Drahtgatter unter Zuführung eines Sägehilfsmittels durch das Werkstück arbeiten, dadurch gekennzeichnet, daß der Haltearm parallel zu dem Drahtgatter schwenkbar ist und der Vorschub über eine Vorschubführung verfügt, die den Sägekopf mit dem Drahtgatter gegen das Werkstück führt.

12. Drahtsäge nach Anspruch 11, dadurch gekennzeichnet, daß der Haltearm Teil eines zweiten Vorschubs ist, der seitlich des Sägekopfes angeordnet ist.

13. Verfahren zum Abtrennen von Scheiben von einem Werkstück mit Hilfe einer Drahtsäge mit einem, mehrere Drahtführungsrollen umfassenden Sägekopf, um den eine Vielzahl parallel zueinander liegender Drahtabschnitte bewegt werden, die ebene Drahtgatter bilden, und mit einem Vorschub, mit dessen Hilfe sich die Drahtabschnitte eines der Drahtgatter unter Zuführung eines Sägehilfsmittels durch das Werkstück arbeiten, dadurch gekennzeichnet, daß zum Zweck eines Werkstückwechsels das Werkstück von einem es tragenden Haltearm aus einer Sägeposition über einem Drahtgatter in eine Ablageposition transportiert wird, das Werkstück in der Ablageposition vom Haltearm gelöst wird, ein neues Werkstück vom Haltearm aus einer Aufnahmeposition aufgenommen wird, und das neue Werkstück vom Haltearm in eine Sägeposition über einem Drahtgatter transportiert wird.

14. Verfahren nach Anspruch 13, dadurch gekennzeichnet, daß das vom Haltearm gelöste Werkstück in einem mit einer Flüssigkeit gefüllten Behälter abgelegt wird.

15. Verfahren nach Anspruch 13 oder Anspruch 14, dadurch gekennzeichnet, daß der Haltearm Teil des Vorschubs ist und der Vorschub seitlich des Sägekopfes angeordnet ist.

16. Verfahren nach Anspruch 13 oder Anspruch 14, dadurch gekennzeichnet, daß der Haltearm Teil eines Manipulators ist, der seitlich des Sägekopfes angeordnet ist.

17. Verfahren zum Abtrennen von Scheiben von einem Werkstück mit Hilfe einer Drahtsäge mit einem, mehrere Drahtführungsrollen umfassenden Sägekopf, um den eine Vielzahl parallel zueinander liegender Drahtabschnitte bewegt werden, die ebene Drahtgatter bilden, und einem Vorschub, mit dessen Hilfe sich die Drahtabschnitte eines der Drahtgatter unter Zuführung eines Sägehilfsmittels durch das Werkstück arbeiten, dadurch gekennzeichnet, daß der Sägekopf und ein zweiter Sägekopf abwechselnd zum Abtrennen von Scheiben eingesetzt werden, wobei der nicht eingesetzte Sägekopf auf seinen Einsatz vorbereitet wird, während der andere Sägekopf im Einsatz ist.

18. Verfahren nach einem der Ansprüche 13 bis 17, dadurch gekennzeichnet, daß alle Bewegungsabläufe automatisch gesteuert werden.
